## Europäisches Patentamt

## European Patent Office

## Office européen des brevets

(11) Numéro de publication: **0 442 786 B1**

(12)

# FASCICULE DE BREVET EUROPEEN

(45) Date de publication du fascicule du brevet: **06.09.95**

(51) Int. Cl.⁶: **C08L 75/04**, //(C08L75/04, 77:00)

(21) Numéro de dépôt: **91400298.5**

(22) Date de dépôt: **07.02.91**

(54) **Procédé de transformation des TPU par extrusion agents modifiants utilises selon ce procédé.**

(30) Priorité: **13.02.90 FR 9001691**

(43) Date de publication de la demande:
**21.08.91 Bulletin 91/34**

(45) Mention de la délivrance du brevet:
**06.09.95 Bulletin 95/36**

(84) Etats contractants désignés:
**AT BE CH DE DK ES FR GB GR IT LI LU NL SE**

(56) Documents cités:
**EP-A- 0 012 413**
**EP-A- 0 197 845**
**EP-A- 0 334 186**
**EP-A- 0 361 712**
**FR-A- 2 575 167**

(73) Titulaire: **ELF ATOCHEM S.A.**
**4 & 8, Cours Michelet**
**La Défense 10**
**F-92800 Puteaux (FR)**

(72) Inventeur: **Piard, André**
**Hameau de Champeaux**
**F-27300 Bernay (FR)**
Inventeur: **Alex, Patrick**
**2, Villa des Pommiers**
**F-91470 Limours Pecquese (FR)**

## Description

La présente invention a pour objet l'amélioration de la transformation des polyuréthannes thermoplastiques ou TPU dans la mise en oeuvre par extrusion à l'aide d'agent(s) modifiant(s) choisi(s) parmi les élastomères thermoplastiques à base de polyamide.

Parmi les propriétés des TPU, on peut citer la résistance à l'hydrolyse, la flexibilité à basse température, la résistance à la chaleur, la résistance à l'abrasion.

Cependant, leur mise en oeuvre ou processabilité est peu reproductible d'une opération à l'autre et on note des variations significatives de leur comportement rhéologique.

Les masses transformables citées dans la demande FR 2 575 167 sont constituées de polyamide, TPU et de polyoléfine activée. Dans la demande EP 361 712, la composition décrite contient un polyamide élastomère et un mélange ou produit de réaction d'un TPU et une résine styrénique. La demande EP 197 845 concerne des colles à base de polyétheresteramides et/ou de TPU.

L'invention mise au point par la demanderesse a notamment pour but d'améliorer les propriétés rhéologiques des TPU et de rendre plus reproductible leur transformation.

Les polyuréthannes thermoplastiques ou TPU sont des copolymères à base polyuréthanne qui peuvent être obtenus par réaction conjointe d'un diol de haute masse moléculaire ou polyol qui constitue la séquence souple cristallisable de l'élastomère, sur un diisocyanate et un diol de basse masse moléculaire qui engendrent la séquence rigide, la synthèse pouvant avoir lieu en une ou deux étapes.

Parmi les TPU, on peut distinguer ceux dont les polyols sont de type polyester (tel que le polyéthylène adipate, le polytétraméthylène adipate, le poly(e-caprolactone) et ceux dont les polyols sont de type polyéther (tels que le polypropylène, le polytétraméthylène glycol).

Les TPU de type polyéther ont en général une meilleure résistance à l'hydrolyse, une température de transition vitreuse inférieure à celle des TPU de type polyester qui présentent, en revanche, une meilleure résistance aux hydrocarbures et aux huiles.

La transformation ou mise en forme d'objets, tels que fils, feuilles, plaques, films, tubes, revêtement, par exemple de câbles... se fait selon des techniques d'extrusion telles que l'extrusion-soufflage, l'extrusion filature, l'extrusion gaine ou cast, l'extrusion-plaxage, l'extrusion-couchage ainsi que la coextrusion.

Pour la mise en oeuvre des TPU par extrusion, on travaille en général à des températures comprises entre 150 et 240° C qui sont réglées de façon à augmenter progressivement sur toute la longueur de la vis et à diminuer entre l'adaptateur et la filière.

Les vitesses de rotation de la vis sont en général comprises entre 12 et 60 trs/mn.

Le procédé de transformation des TPU selon l'invention consiste à ajouter un ou plusieurs agents modifiants à la matière plastique à transformer à base de TPU que l'on désire extruder.

Les agents modifiants selon l'invention sont choisis parmi les élastomères thermoplastiques à base de polyamide, statistiques ou séquencés, à l'exclusion des résines styréniques.

Ces résines styréniques sont des copolymères de styrène et d'un monomère contenant un groupement fonctionnel choisi parmi les carboxyles, anhydrides, amines, époxy et hydroxyles.

Les copolymères statistiques sont formés par l'enchaînement aléatoire des divers constituants (monomères et/ou prépolymères) tandis que les copolymères séquencés ou blocs préférés par la demanderesse, sont formés à partir de blocs présentant une certaine longueur de chaîne de leurs divers constituants.

Les copolymères à base de polyamide selon l'invention sont soit des polyesteramides, soit des polyétheramides.

Les polyétheramides séquencés ou polyéther bloc amides peuvent notamment résulter de la copolycondensation de séquences polyamides à extrémités réactives, telles que, entre autres :

a) Séquences polyamides à bouts de chaînes diamines avec des séquences polyoxyalkylènes à bouts de chaînes dicarboxyliques.

b) Séquences polyamides à bouts de chaînes dicarboxyliques avec des séquences polyoxyalkylènes à bouts de chaînes diamines obtenues par cyanoéthylation et hydrogénation de séquences polyoxyalkylènes alpha, oméga dihydroxylées aliphatiques appelées polyétherdiols.

c) Séquences polyamides à bouts de chaînes dicarboxyliques avec des polyétherdiols, appelés polyétheresteramides,

particulièrement préférés par la demanderesse comme agents modifiants des TPU.

La composition et la fabrication de tels polyétheresteramides ont été décrites dans les brevets français n° 74.18913 et 77.26678 au nom de la demanderesse dont le contenu s'ajoute à la présente description.

La masse moléculaire moyenne en nombre de ces séquences polyamide est généralement comprise entre 500 et 10 000 et plus particulièrement entre 600 et 5 000. Les séquences polyamide des polyétheresteramides sont formées de préférence de polyamide 6, 6.6, 6.12, 11, 12 ou 12.12 et/ou de polyamide amorphe ou de copolyamide résultant de la polycondensation de leurs monomères.

La masse moléculaire moyenne en nombre des polyéthers est comprise généralement entre 200 et 6 000 et plus particulièrement entre 600 et 3 000.

Les séquences polyéther consistent de préférence essentiellement en polytétraméthylène glycol (PTMG). Outre du PTMG, elles peuvent par exemple contenir du polyéthylène glycol (PEG) et/ou de polypropylène glycol (PPG).

La viscosité inhérente des polyétheresteramides est avantageusement comprise entre 0,8 et 2,05. Elle est mesurée dans le métacrésol à 20°C avec une concentration initiale de 0,5 g de polymère pour 100 g de métacrésol.

Les polyétheresteramides peuvent être formés de 5 à 85 % en poids de polyéther, et de 95 à 15 % en poids de polyamides, et de préférence de 30 à 85 % en poids de polyéther et de 70 à 15 % en poids de polyamide.

Les polyétheresteramides préférés par la demanderesse sont ceux dont les séquences polyéther sont essentiellement constituées de PTMG et/ou de PEG et plus particulièrement ceux dont les séquences polyamide dérivent de polyamide-11, -12 et/ou -12,12.

La quantité d'agents modifiants nécessaire à la transformation des TPU est en général comprise entre 5 et 45 % du poids de TPU, avantageusement entre 10 et 30 % et de préférence comprise entre 10 et 20 %.

Le ou les agents modifiants sont incorporés au(x) TPU avant leur transformation par tout procédé de mélange tel que dry-blend ou mélange à sec, compoundage, particulièrement préféré par la demanderesse.

Dans le cas du mélange à sec les constituants sont en général sous forme de granulés de diamètre moyen compris entre 2 et 5 mm.

Dans le cas du compoundage, les constituants sont mélangés à l'état fondu en général dans un malaxeur à une température comprise entre 190 et 240°C.

Une fois le mélange des constituants effectué en général sous forme de granulés de 2 à 5 mm de diamètre moyen et préalablement à l'étape de transformation proprement dite, on préfère étuver le mélange sous vide par exemple pendant 2 heures à 110°C puis le conditionner sous emballage étanche afin d'éviter la reprise d'humidité.

Dans le cas de la transformation des TPU par extrusion, on note que la présence d'agent(s) modifiant(s) permet d'améliorer de façon significative,

.   un ou plusieurs paramètres de transformation suivants :
-   le débit maximal de la machine, plus particulièrement pour les mélanges TPU/agents modifiants préparés par compoundage
-   la pression qui se trouve généralement réduite et ce quel que soit le débit de la machine
-   le couple, donc l'énergie consommée par la machine, est diminué

.   le comportement rhéologique des TPU et notamment :
-   la tenue du melt ou masse fondue en sortie d'outillage,
-   la viscosité de la masse fondue au sein de la machine est réduite
-   l'extrudabilité du melt, c'est-à-dire conformation facilitée et plus particulièrement lors de la fabrication de tubes à base de TPU de type polyéther

.   ainsi que les caractéristiques mécaniques des produits finis :
-   la souplesse à froid par rapport aux TPU extrudés en l'absence de tout agent modifiant selon l'invention.

Pour les exemples 1 à 4 qui suivent, l'extrusion est effectuée à l'aide d'un rhéomètre HAAKE avec une vis à 2 zones de diamètre 30 mm et L/D = 27.

Le fourreau de la vis comporte une zone d'alimentation refroidie à l'air et cinq zones de régulation; la filière possède sa propre zone de régulation.

Le taux de compression de la vis est égal à 2.

Un capteur de température et un capteur de pression sont placés à l'entrée de la filière qui est une filière à jonc verticale, de diamètre = 3 mm et L/D = 6.

Selon les essais, la vitesse de la vis varie entre 10 et 42 trs/mn.

Les caractéristiques des TPU mis en oeuvre sont indiquées dans le Tableau 1 et celles des agents modifiants utilisés sont reprises dans le Tableau 2.

## EXEMPLE 1

A - On extrude un compound constitué de 90 parties en poids de $T_1$ et 10 parties en poids de $A_1$ préalablement préparé dans un malaxeur BUSS.

La température d'extrusion est comprise entre 190 et 220°C. A l'entrée de la filière la température du melt est comprise entre 195 et 198°C. En sortie de filière on obtient du jonc.

On mesure en continu la pression, le couple absorbé, la vitesse de la vis ainsi que le débit pour différentes vitesses de vis.

On mesure également le débit maximal de la machine.

On évalue également le comportement rhéologique du produit en sortie de filière en mesurant le temps que met le jonc à s'écouler d'une certaine hauteur $H_i$ mesurée à compter de la sortie de filière par gravité.

Les hauteurs retenues sont $0,1(H_1)$ ; $0,2(H_2)$ ; $0,3(H_3)$ ; $0,5(H_5)$ et $1(H_{10})$m.

On mesure la viscosité à l'aide d'un rhéomètre capillaire INSTRON.

On suit l'évolution de la rigidité du produit en mesurant à différentes températures T son module de flexion selon la norme ASTM D 790 et calcule le rapport

$$R_T = \frac{\text{module de flexion à T°C}}{\text{module de flexion à 23°C}}$$

B - Dans les mêmes conditions que sous A, on extrude un mélange de granulés ou dry-blend constitué de 90 parties en poids de $T_1$ et 10 parties de $A_1$.

On effectue les mêmes mesures que sous A.

C - Dans les mêmes conditions que sous A, on extrude un dry-blend constitué de 80 parties en poids de $T_1$ et 20 parties en poids de $A_1$ et effectue les mêmes mesures que sous A.

D - A titre de comparaison on effectue les mêmes mesures que décrites sous A pour T1 seul.

Les résultats de A à D sont réunis dans le Tableau 3.

## EXEMPLE 2

A - On extrude dans les mêmes conditions que l'exemple 1.A, un compound constitué de 90 parties en poids de $T_2$ et 10 parties en poids de $A_2$ préalablement préparé dans un malaxeur (co-kneader) BUSS et on effectue les mêmes mesures qu'en 1.A.

B - On extrude dans les mêmes conditions que l'exemple 1.A, un mélange de granulés (dry-blend) constitué de 90 parties en poids de $T_2$ et 10 parties en poids de $A_2$ et on effectue les mêmes mesures qu'en 1.A.

C - On extrude dans les mêmes conditions que l'exemple 1.A, un mélange de granulés (dry-blend) constitué de 90 parties en poids de $T_2$ et 10 parties en poids de $A_1$ et on effectue les mêmes mesures qu'en 1.A.

D - On extrude dans les mêmes conditions que l'exemple 1.A, un mélange de granulés (dry-blend) constitué de 90 parties en poids de $T_2$ et 10 parties en poids de $A_4$ et on effectue les mêmes mesures qu'en 1.A.

E - A titre de comparaison on extrude dans les mêmes conditions que l'exemple 1.A, le produit $T_2$ et on effectue les mêmes mesures qu'en 1.A.

Les résultats de A à E sont réunis dans le Tableau 3.

## EXEMPLE 3

A - On extrude dans les mêmes conditions que l'exemple 1.A, un mélange de granulés (dry-blend) constitué de 90 parties en poids de $T_3$ et 10 parties en poids de $A_1$ et on effectue les mêmes mesures qu'en 1.A.

B - On extrude dans les mêmes conditions que l'exemple 1.A, un mélange de granulés (dry-blend) constitué de 80 parties en poids de $T_3$ et 20 parties en poids de $A_1$ et on effectue les mêmes mesures qu'en 1.A.

C - A titre de comparaison on extrude dans les mêmes conditions que l'exemple 1.A le produit $T_3$ et on effectue les mêmes mesures qu'en 1.A.

Les résultats de A à C sont réunis dans le Tableau 3.

## EXEMPLE 4

A - On extrude dans les mêmes conditions que l'exemple 1.A, un mélange de granulés (dry-blend) constitué de 90 parties en poids de $T_4$ et 10 parties en poids de $A_1$ et on effectue les mêmes mesures qu'en 1.A.

B - On extrude dans les mêmes conditions que l'exemple 1A, un mélange de granulés (dry-blend) constitué de 90 parties en poids de $T_4$ et 10 parties en poids de $A_2$ et on effectue les mêmes mesures qu'en 1.A.

C - A titre de comparaison, on extrude dans les mêmes conditions que l'exemple 1.A, le produit $T_4$.

On effectue les mêmes mesures qu'en 1.A.

Les résultats de A à C sont réunis dans le Tableau 3.

## TABLEAU 1

| N° TPU | TYPE | DENSITE | DURETE SHORE A/D ($\pm$ 2/$\pm$ 2) |
|---|---|---|---|
| $T_1$ | polyester | 1,19 | 87/34 |
| $T_2$ | polyester | 1,21 | 92/41 |
| $T_3$ | polyéther | 1,12 | 87/36 |
| $T_4$ | polyéther | 1,14 | 96/47 |

TABLEAU 2

| N°<br>D'AGENT<br>MODIFIANT | TYPE | CARACTERISTIQUES |
|---|---|---|
| $A_1$ | polyétheresteramide | 50 % en poids de PTMG   Mn = 2000<br>50 % en poids de PA-12 Mn = 2000 |
| $A_2$ | séquences<br>polyéther = PTMG<br><br>séquences<br>polyamide = PA-12 | 33 % en poids de PTMG   Mn = 1000<br>67 % en poids de PA-12 Mn = 2000 |
| $A_4$ | polyétheresteramide<br>séquences<br>polyéther = PEG<br>séquences<br>polyamide = PA-12 | 50 % en poids de PEG    Mn = 1500<br>50 % en poids de PA-12 Mn = 1500 |

6

TABLEAU 3

| N° EX | DEBIT (kg/h) | PRESSION (bars) | COUPLE (N/m) | DEBIT MAXIMAL (kg/h) | TENUE DU MELT * (sec) | VISCOSITE (Pa.s) à 210°C | | R -20 | R -40 |
|---|---|---|---|---|---|---|---|---|---|
| | pour vitesse de vis = 23 trs/mn | | | | | $\dot{\gamma} = 10^2$ | $\dot{\gamma} = 10^3$ | | |
| 1.A | 4,4 | 53 | 68 | 12 | H10/7 | 530 | 215 | | |
| 1.B | 5,4 | 93 | 102 | 8,5 | H10/6,5 | 440 | 190 | | |
| 1.C | 5,4 | 92 | 100 | 9,7 | H10/7 | | | | |
| 1.D | 6,2 | 102 | 140 | 6,7 | H10/5,6 | 180 | 120 | | |
| 2.A | 4,9 | 78 | 80 | 11 | H2/2,9 H5/5,2 | 515 | 255 | 2,1 | 6,7 |
| 2.B | 5,1 | 125 | 115 | 7,5 | H2/2,6 H5/5,7 | 1600 | 400 | 2,7 | 8,1 |
| 2.C | 5,1 | 125 | 125 | 6,5 | H2/2,5 H5/5,6 | 1600 | 400 | 3,5 | 7,5 |
| 2.D | 5,1 | 125 | 125 | 10 | H2/1,9 H5/4,4 | 670 | 225 | | |
| 2.E | 5,2 | 130 | 150 | 5,2 | H2/1,8 H5/4,4 | 1950 | 500 | 3,3 | 13,4 |

| N° EX | DEBIT (kg/h) | PRESSION (bars) | COUPLE (N/m) | DEBIT MAXIMAL (kg/h) | TENUE DU MELT * (sec) | VISCOSITE (Pa.s) à 210°C | | R -20 | R -40 |
|---|---|---|---|---|---|---|---|---|---|
| | pour vitesse de vis = 23 trs/mn | | | | | $\dot{\gamma} = 10^2$ | $\dot{\gamma} = 10^3$ | | |
| 3.A | 5,8 | 77 | 85 | 13 | H10/3,7 | | | | |
| 3.B | 4,9 | 65 | 66 | 13,5 | H10/5 | | | | |
| 3.C | 5,85 | 73 | 88 | 11,6 | H10/3 | 485 | 235 | | |
| 4.A | 5,23 | 95 | 110 | 8 | H2/1,9 H3/2,9 H5/4 | 535 | 255 | | |
| 4.B | 5,15 | 96 | 110 | 8 | H2/2 H3/3 H5/4,4 | 590 | 270 | | |
| 4.C | 5,65 | 95 | 135 | 6,6 | H2/1,8 H3/2,5 H5/3,7 | 530 | 265 | | |

* pour les exemples    1.A à 1.C le débit est de 6,2 kg/h
2.A à 2.E le débit est de 5,2 kg/h
3.A à 3.C le débit est de 5,8 kg/h
4.A à 4.C le débit est de 5,6 kg/h

## Revendications

1. Procédé de transformation par extrusion des polyuréthannes thermoplastiques (TPU) caractérisé en ce qu'on ajoute de 5 à 45 % en poids d'agent(s) modifiant(s) par rapport au TPU, le(s) agent(s) modifiants étant choisis parmi les élastomères thermoplastiques à base de polyestéramides ou de polyétheramides à l'exclusion des résines styréniques.

2. Procédé selon la revendication 1, caractérisé en ce qu'on ajoute de 10 à 30 % en poids d'agent(s) modifiant(s) par rapport au(x) TPU.

3. Procédé selon la revendication 1 ou 2, caractérisé en ce que le(s) agent(s) modifiant(s) sont choisis parmi les copolymères blocs.

4. Procédé selon la revendication 3, caractérisé en ce que le(s) agent(s) modifiant(s) sont choisis parmi les polyéther bloc amides.

5. Procédé selon la revendication 3, caractérisé en ce que les séquences polyéther sont à base de PTMG et/ou de PEG.

6. Procédé selon la revendication 3 à 5, caractérisé en ce que les séquences polyamide sont à base de PA-11, PA-12 et/ou de PA-12,12.

7. Procédé selon l'une quelconque des revendications 1 à 6, caractérisé en ce que le(s) TPU et le(s) agent(s) modifiants sont préalablement mélangés à sec.

8. Procédé selon l'une quelconque des revendications 1 à 6, caractérisé en ce que le(s) TPU et le(s) agent(s) modifiants sont préalablement compoundés.

9. Objets comprenant une ou plusieurs compositions à base de TPU extrudées selon le procédé des revendications 1 à 8.

10. Compositions à base de TPU sous forme de fils, films, feuilles, plaques, tubes, revêtements, pour la réalisation d'objets selon la revendication 9.

**Claims**

1. Process for converting thermoplastic polyurethanes (TPUs) by extrusion, characterized in that from 5 to 45 % by weight of modifying agent(s) relative to the TPU is (are) added, the modifying agent(s) being chosen from polyesteramide- or polyetheramide-based thermoplastic elastomers with the exclusion of styrene-based resins.

2. Process according to Claim 1, characterized in that from 10 to 30 % by weight of modifying agent(s) relative to the TPU(s) is (are) added.

3. Process according to Claim 1 or 2, characterized in that the modifying agent(s) is (are) chosen from block copolymers.

4. Process according to Claim 3, characterized in that the modifying agent(s) is (are) chosen from polyether-block-amides.

5. Process according to Claim 3, characterized in that the polyether blocks are based on PTMG and/or PEG.

6. Process according to Claim 3 to 5, characterized in that the polyamide blocks are based on PA-11, PA-12 and/or PA-12,12.

7. Process according to any one of Claims 1 to 6, characterized in that the TPU(s) and the modifying agent(s) are premixed dry.

8. Process according to any one of Claims 1 to 6, characterized in that the TPU(s) and the modifying agent(s) are precompounded.

9. Objects comprising one or more TPU-based compositions extruded according to the process of Claims 1 to 8.

10. TPU-based compositions in the form of filaments, films, sheets, plates, tubes or coatings for the production of objects according to Claim 9.

**Patentansprüche**

1. Verfahren zur Verarbeitung von thermoplastischen Polyurethanen (TPU) durch Extrusion, dadurch gekennzeichnet, daß man 5 bis 45 Gew.-% eines oder mehrerer Modifizierungsmittel, bezogen auf TPU zugibt, wobei das oder die Modifizierungsmittel aus thermoplastischen Elastomeren auf Basis von Polyesteramiden oder Polyetheramiden mit Ausnahme von Styrolharzen ausgewählt wird/werden.

2. Verfahren nach Anspruch 1, dadurch gekennzeichnet, daß man 10 bis 30 Gew.-% eines oder mehrerer Modifizierungsmittel, bezogen auf das oder die TPU zugibt.

3. Verfahren nach Anspruch 1 oder 2, dadurch gekennzeichnet, daß das oder die Modifizierungsmittel aus Blockcopolymeren ausgewählt wird/werden.

4.  Verfahren nach Anspruch 3, dadurch gekennzeichnet, daß das oder die Modifizierungsmittel aus Polyether-Blockamiden ausgewählt werden.

5.  Verfahren nach Anspruch 3, dadurch gekennzeichnet, daß die Polyetherblöcke auf PTMG und/oder PEG basieren.

6.  Verfahren nach einem der Ansprüche 3 bis 5, dadurch gekennzeichnet, daß die Polyamidblöcke auf PA-11, PA-12 und/oder PA-12,12 basieren.

7.  Verfahren nach einem der Ansprüche 1 bis 6, dadurch gekennzeichnet, daß das oder die TPU und das oder die Modifizierungsmittel vorher im trockenen Zustand vermischt werden.

8.  Verfahren nach einem der Ansprüche 1 bis 6, dadurch gekennzeichnet, daß das oder die TPU und das oder die Modifizierungsmittel vorher intensiv vermischt (compoundiert) werden.

9.  Gegenstände, enthaltend eine oder mehrere Zusammensetzung(en) auf Basis von nach dem Verfahren der Ansprüche 1 bis 8 extrudiertem TPU.

10. Zusammensetzungen auf Basis von TPU in Form von Fasern, Filmen, Folien, Platten, Rohren, Überzügen, zur Herstellung von Gegenständen nach Anspruch 9.